# EUROPÄISCHE PATENTSCHRIFT

(11) **EP 3 168 462 B1**
(45) Veröffentlichungstag und Bekanntmachung des Hinweises auf die Patenterteilung: **29.11.2017**
(21) Anmeldenummer: 15194011.1
(22) Anmeldetag: 11.11.2015
(51) Int. Cl.: F03D 80/00, F03D 80/80

(54) **VORRICHTUNG ZUR LAGERUNG EINES LEITUNGSROHRS IN EINER ROTORWELLE EINER WINDENERGIEANLAGE, ROTORWELLE UND WINDENERGIEANLAGE**
A DEVICE FOR SUPPORTING A CONDUCTING PIPE IN A ROTOR SHAFT OF A WIND TURBINE, THE ROTOR SHAFT AND WIND TURBINE
DISPOSITIF DE STOCKAGE D'UNE CONDUITE DANS UN ARBRE DE ROTOR D'UNE EOLIENNE, ARBRE DE ROTOR ET EOLIENNE

(43) Veröffentlichungstag der Anmeldung: 17.05.2017
(73) Patentinhaber: Nordex Energy GmbH, 22419 Hamburg (DE)
(72) Erfinder: Kaiser, Uwe, 18055 Rostock (DE)
(74) Vertreter: Garrels, Sabine

(56) Entgegenhaltungen:
- EP-A2- 2 078 856
- DE-B4-102008 035 339
- US-A1- 2013 292 950

## Beschreibung

Die Erfindung betrifft eine Vorrichtung zur Lagerung eines Leitungsrohrs in einer Rotorwelle einer Windenergieanlage. Ebenso betrifft die Erfindung die Windenergieanlage selbst.

In der Rotornabe einer Windenergieanlage befinden sich verschiedene Systeme, wie beispielsweise die Blatteinstellwinkelregelung (Pitchregelung) für die Rotorblätter, die von einer zentralen Betriebsführung der Windenergieanlage gesteuert werden. Zu deren Steuerung, aber auch um Signale der Blatteinstellwinkelregelung (Pitchregelung) an die Betriebsführung zu melden, ist eine Datenübertragung zwischen der drehenden Rotornabe und dem stehenden Maschinenhaus erforderlich.

Bei der Übertragung von elektrischen Signalen und elektrischer Leistung zwischen einer drehenden Rotornabe und einem feststehenden Maschinenhaus haben sich bei Windenergieanlagen Schleifringübertrager bewährt. Für die Übertragung der elektrischen Signale kann auf einen galvanischen, optischen, induktiven oder kapazitiven Übertragungsweg zurückgegriffen werden.

Für die Übertragung von flüssigen oder gasförmigen Stoffen haben sich Mediendrehdurchführungen bewährt, mit denen beispielsweise Wasser, Öle oder Gase übertragen werden können.

Die elektrische Blatteinstellwinkelregelung (Pitchregelung) in Windenergieanlagen erfolgt oftmals mit einem Schleifringsystem, das als Übertragungseinrichtung elektrische Energie und Signale aus dem ortsfesten elektrischen System des Maschinenhauses der Windenergieanlage in das mit dem Rotor der Windenergieanlage rotierende Pitchsystem in der Rotornabenbaugruppe überträgt. Ein feststehendes Leitungsrohr (auch Pitchrohr), welches die vom feststehenden Maschinenhaus in die rotierende Rotornabe führenden elektrischen Leitungen aufnimmt und schützt, verläuft dazu innerhalb einer Kernbohrung in der Rotorwelle. Das Leitungsrohr ist üblicherweise einerseits hinter dem Getriebe und andererseits am Rotorwellenflansch, der zur Befestigung der Rotorwelle an der Rotornabe vorgesehen ist, durch ein dort angeordnetes zweites Lager gelagert. Auf diese Weise rotiert die Rotorwelle um das Leitungsrohr.

In der Patentschrift DE 102008035339 B4 wird eine Rotorwelle für eine Windenergieanlage offenbart, wobei die Rotorwelle zumindest teilweise hohl ist. In der rotierenden Rotorwelle sind ein elektrische Leitungen aufnehmendes Leitungsrohr und eine Übertragungseinrichtung, welche eine elektrische Verbindung zwischen einem feststehenden Maschinenhaus und einem rotierenden Rotor der Windenergieanlage herstellt, angeordnet. Das Leitungsrohr ist über zwei Lager in der Rotorwelle abgestützt, wobei ein Lager an dem Gehäuse der Übertragungseinrichtung im Bereich des der Rotornabe zugewandten Endes der Rotorwelle und ein zweites Lager im Bereich des der Rotornabe abgewandten Endes der Rotorwelle angeordnet ist.

In US 20130292950 A1 wird eine Windenergieanlage beschrieben, die einen sogenannten Direct Drive offenbart. Für diese Lösung ist kein Getriebe, keine langsame und schnelle Welle erforderlich. Der Synchron-Generator arbeitet als Außenläufer. Rotor- und Generatorwelle sind hohl ausgebildet und weisen einen relativ großen Durchmesser auf- somit sind die Rotorwelle und die Generatorwelle durch Service-Personal betretbar.

### Darstellung der Erfindung

Ausgehend von dem erläuterten Stand der Technik liegt der Erfindung die Aufgabe zugrunde, eine Vorrichtung zur Lagerung eines Leitungsrohrs in einer Rotorwelle bereitzustellen, die eine einfache Montage erlaubt, sowie die Arbeit im Rotornabeninnenraum vereinfacht. Außerdem sollen die Bauräume vor und hinter der Vorrichtung gegeneinander öldicht abgedichtet werden.

Weiterhin ist es die Aufgabe, eine entsprechende Rotorwelle für eine Windenergieanlage zur Verfügung zu stellen, welche die erfindungsgemäße Vorrichtung und eine Übertragungseinrichtung aufnehmen kann.

Die Erfindung löst diese Aufgabe durch die Merkmale des Hauptanspruchs und der Nebenansprüche. Vorteilhafte Ausgestaltungen finden sich in den abhängigen Ansprüchen, der Beschreibung sowie den Figuren.

Die erfindungsgemäße Vorrichtung zur Lagerung eines Leitungsrohrs in einer Rotorwelle einer Windenergieanlage besteht aus einer teilweise hohl ausgebildeten Rotorwelle, in welcher das Leitungsrohr angeordnet ist. In dem Leitungsrohr werden unterschiedliche Medien aus einem feststehenden Maschinenhaus der Windenergieanlage in Richtung einer mit der Rotorwelle verbundenen Rotornabe geführt. Dies können sowohl elektrische Leitungen, aber auch Lichtwellenleiter und Medienleitungen für Gase und Flüssigkeiten sein. Die erfindungsgemäße Lagerung des Leitungsrohrs erfolgt durch eine Vorrichtung mit mehreren exzentrischen Feststellelementen, wobei durch ein Verdrehen der exzentrischen Feststellelemente das Leitungsrohr konzentrisch ausgerichtet wird.

Nach einem bevorzugten Ausführungsbeispiel sind zwei kreisrunde Scheiben über mindestens drei drehbare Abstandshalter miteinander verbunden, welche ihrerseits mit mindestens einem exzentrischen Feststellelement fest verbunden sind. Bevorzugt werden sechs exzentrische Feststellelemente angeordnet, wobei auch eine andere Anzahl von exzentrischen Feststellelementen möglich ist.

Jeweils zwischen zwei drehbaren Abstandshaltern ist ein u-förmiges Abstandsblech angeordnet und fest mit den beiden Scheiben verbunden.

Die exzentrischen Feststellelemente sind in Form eines Kreissegments mit einem äußeren Kreisbogen ausgeführt, wobei der äußere Kreisbogen einen konstanten Außenradius hat. Der Mittelpunkt des äußeren Kreisbogens jedes exzentrischen Feststellelements liegt außerhalb der Rotationsachse der drehbaren Abstandshalter.

Die kreisrunden Scheiben sind mit jeweils einer mittig angeordneten kreisrunden Ausnehmung versehen. Zwischen den beiden Scheiben ist ein Lager zur Lagerung des Leitungsrohrs fest mit einer der Scheiben verbunden. Die Scheiben sind an ihrem äußeren Rand über ihren gesamten Umfang mit einer Dichtung versehen.

Die Rotorwelle eines Rotors für eine Windenergieanlage ist zumindest teilweise hohl, wodurch ein Rotorwelleninnenraum entsteht, der an eine Rotornabe angeschlossen ist. Der Rotorwelleninnenraum weist einen der Rotornabe zugewandten zylindrischen axialen Raum und eine der Rotornabe abgewandte axiale Durchführung für ein feststehendes Leitungsrohr auf, wobei der zylindrische axiale Raum einen größeren radialen Durchmesser als die axiale Durchführung hat, so dass zwischen dem zylindrischen axialen Raum und der axialen Durchführung ein Absatz angeordnet ist. Unmittelbar vor der axialen Durchführung ist die erfindungsgemäße Vorrichtung abnehmbar zur drehbaren Lagerung des Leitungsrohrs angeordnet und mit der Rotorwelle kraftschlüssig verbunden, so dass die axiale Durchführung dadurch abgedichtet wird.

Eine Übertragungseinrichtung für unterschiedliche Medien, insbesondere Elektrizität, Licht, Gase und Fluide, ist vollständig in der Rotorwelle angeordnet, welche eine Verbindung zwischen einem feststehenden Maschinenhaus und dem rotierenden Rotor herstellt.

Weiterhin wird eine Windenergieanlage mit einer Rotorwelle, in der eine Vorrichtung zur Lagerung eines Leitungsrohrs angeordnet ist, gemäß der vorhergehenden Merkmale unter Schutz gestellt.

Die Lösung zeichnet sich dadurch aus, dass die Konstruktion in eingeschränkten Montageräumen eingesetzt werden kann. Eine einfache Zentrierung wird durch die erfindungsgemäße Vorrichtung ermöglicht. Außerdem werden die Räume vor und hinter der Vorrichtung zueinander abgedichtet.

### Ausführung der Erfindung

Ein Ausführungsbeispiel der Erfindung wird nachfolgend anhand von Zeichnungen näher erläutert. Es zeigen schematisch:
Fig. 1 eine Rotorwelle und ein Getriebe in einer dreidimensionalen Seitenansicht mit der darin angeordneten erfindungsgemäßen Vorrichtung,
Fig. 2 die erfindungsgemäße Vorrichtung in einer dreidimensionalen Frontansicht ohne eingesetztes Lager,
Fig. 3 die erfindungsgemäße Vorrichtung in einer dreidimensionalen Frontansicht mit eingesetztem Lager und
Fig. 4 Detailansicht eines Abstandshalters mit zwei darauf angeordneten exzentrischen Feststellelementen.

Soweit nichts anderes bestimmt ist, bezeichnen in den Figuren gleiche Bezugszeichen gleiche Gegenstände.

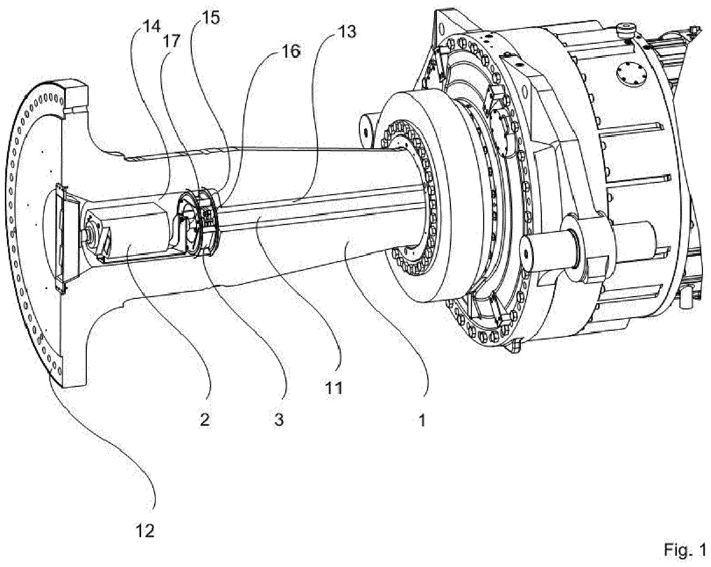

In Fig. 1 ist eine zum Teil hohl ausgebildete Rotorwelle 1 einer nicht näher dargestellten Windenergieanlage gezeigt. Die Rotorwelle 1 weist einen Flansch 12 auf, mit dem sie an einer hier nicht gezeigten Rotornabe der Windenergieanlage befestigt ist. Innerhalb der mit der Rotornabe rotierenden Rotorwelle 1 verläuft koaxial ein feststehendes Leitungsrohr 11 (Pitchrohr). Das Leitungsrohr 11 führt elektrische Leitungen aus dem feststehenden Maschinenhaus (nicht dargestellt) der Windenergieanlage in Richtung des der Rotornabe zugewandten Endes der Rotorwelle 1. Der Rotorwelleninnenraum ist in eine axiale Durchführung 13 für das feststehende Leitungsrohr 11 und einen zylindrischen axialen Raum 14 unterteilt. Der zylindrische axiale Raum 14 ist der Rotornabe zugewandt und die axiale Durchführung 13 befindet sich an dem der Rotornabe abgewandten Ende. Der zylindrische axiale Raum 14 hat einen größeren radialen Durchmesser als die axiale Durchführung 13, wodurch sich zwischen beiden ein Absatz 15 befindet. Das Leitungsrohr 11 ist über eine feststehende Kupplung 17 mit einer vollständig innerhalb der Rotorwelle 1 angeordneten Übertragungseinrichtung 2 zur elektrischen Verbindung zwischen dem feststehenden Maschinenhaus und der rotierenden Rotornabe verbunden. An seinem der Rotornabe abgewandten Ende besitzt die Übertragungseinrichtung 2 ein Lager 16 über das das Gehäuse der Übertragungseinrichtung 2 gegenüber dem Leitungsrohr 11 gelagert ist. Es ist auch möglich, dass das Leitungsrohr 11 gegenüber der Übertragungseinrichtung 2 nicht gelagert ist. Die erfindungsgemäße Vorrichtung 3 zur Lagerung des Leitungsrohrs 11 ist unmittelbar vor der axialen Durchführung 13 angeordnet und kraftschlüssig mit der Rotorwelle 1 verbunden. Die axiale Durchführung 13 wird durch die Vorrichtung 3 abgedichtet.

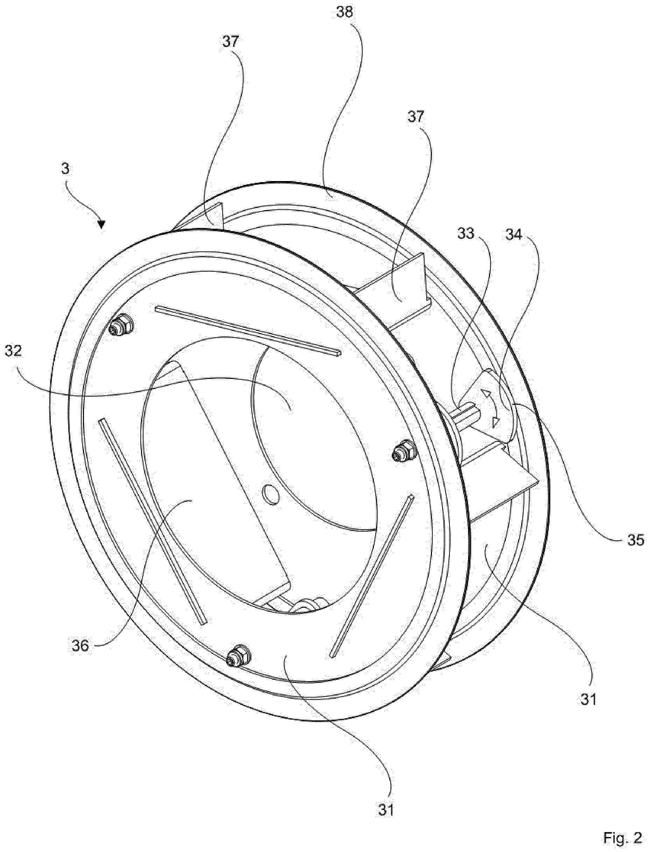

Die erfindungsgemäße Vorrichtung 3 wird in Fig. 2 in einer dreidimensionalen Frontansicht gezeigt. Sie besteht aus zwei kreisrunden Scheiben 31 mit jeweils einer mittig angeordneten kreisrunden Ausnehmung 32. Die beiden Scheiben 31 sind über vorzugsweise drei Abstandshalter 33 miteinander verbunden. Eine andere Anzahl von Abstandshaltern 33 ist denkbar. Weiterhin ist zur Erhöhung der Stabilität der gesamten Konstruktion jeweils zwischen zwei Abstandshaltern 33 ein u-förmiges Abstandsblech 36 angeordnet und fest mit den beiden Scheiben 31 verbunden. Dabei zeigen die beiden Schenkel 37 der u-förmigen Abstandsbleche 36 in Richtung des äußeren Durchmessers der Scheiben 31. Die abgekanteten Bereiche (Schenkel 37) der Abstandsbleche 36 verhindern, dass die gesamte Vorrichtung 3 innerhalb der Rotorwelle 1 kippen kann. Die Scheiben 31 sind jeweils an ihrem äußeren Rand über ihren gesamten Umfang mit einer Dichtung 38 versehen.

Die Abstandshalter 33 sind drehbar zwischen den Scheiben 31 angeordnet und von außen, beispielsweise mittels eines Innensechskantschlüssels, bewegbar. Auf jedem Abstandshalter 33 sind zwei exzentrische Feststellelemente 34 in Form eines Kreissegments mit einem äußeren Kreisbogen 35 angeordnet, wobei dieser äußere Kreisbogen 35 einen konstanten Außenradius hat und in Richtung der Innenwand des zylindrischen axialen Raums 14 zeigt. Der Mittelpunkt des äußeren Kreisbogens 35 liegt außerhalb der Rotationsachse der drehbaren Abstandshalter 33. Die Exzentrizität der Feststellelemente 34 ergibt sich demnach aus den nicht übereinstimmenden Rotationsachsen der Abstandshalter 33 und den Bewegungsachsen der Feststellelemente 34.

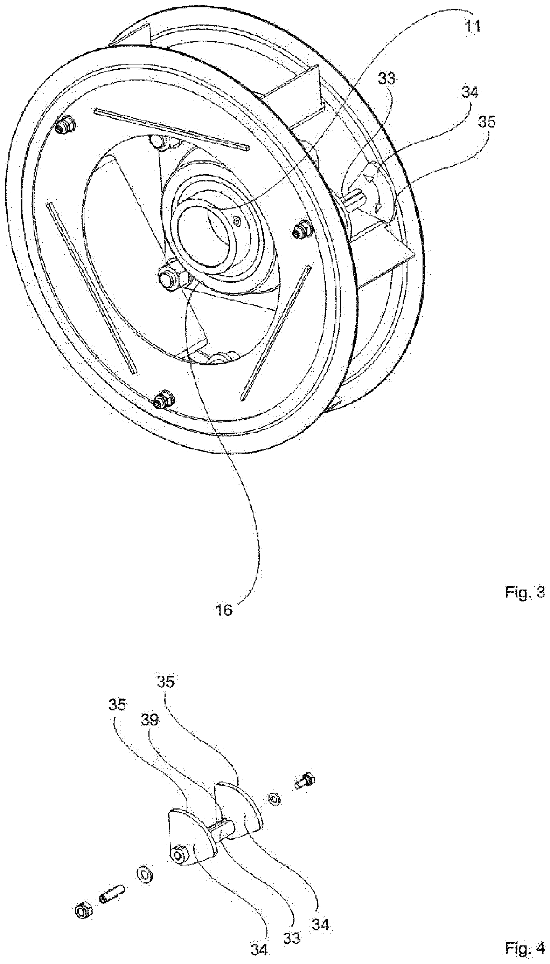

In der kreisrunden Ausnehmung 32 derjenigen Scheibe 31, welche zu dem Absatz 15 zeigt, ist ein Lager 16 angeordnet und fest mit dieser Scheibe 31 verbunden, wie in Fig.3 zu erkennen. In dem Lager 16 ist das Leitungsrohr 11 drehbar gelagert. Für eine konzentrische Lagerung des Leitungsrohrs 11 muss die Vorrichtung 3 innerhalb des zylindrischen axialen Raums 14 ausgerichtet werden. Dazu dienen die sechs exzentrischen Feststellelemente 34, die sich über eine Drehbewegung der Abstandshalter 33 leicht bewegen lassen, beispielsweise mittels eines Innensechskantschlüssels.

Bei der Montage der Rotorwelle 1 wird die Vorrichtung 3 auf das Leitungsrohr 11 in den zylindrischen axialen Raum 14 bis zum Absatz 15 geschoben. Dafür sind die exzentrischen Feststellelemente 34 nach innen, bevorzugt nach links gedreht. Anschließend wird das Lager 16 auf das Leitungsrohr 11 geschoben und an der zur axialen Durchführung 13 gerichteten Scheibe 31 befestigt. Dafür ist es sinnvoll, dass die in diesem Fall äußere Scheibe 31 eine größere Ausnehmung 32 hat als die nach innen gerichtete. Durch ein Verdrehen der exzentrischen Feststellelemente 34 wird das Lager 16 und damit das Leitungsrohr 11 konzentrisch ausgerichtet.

Fig. 4 zeigt eine Detailansicht eines Abstandshalters 33 mit zwei endseitig darauf angeordneten exzentrischen Feststellelementen 34 und dem entsprechenden Befestigungszubehör in einer Explosionsdarstellung. Die beiden exzentrischen Feststellelemente 34 sind durch die Fixierung in einer Falz 39 des Abstandshalters 33 formschlüssig gegen ein Verdrehen auf dem Abstandshalter 33 gesichert.

### Bezugszeichen

- 1: Rotorwelle
- 11: Leitungsrohr
- 12: Flansch
- 13: axiale Durchführung
- 14: zylindrischer axialer Raum
- 15: Absatz
- 16: Lager
- 17: Kupplung

- 2: Übertragungseinrichtung

- 3: Vorrichtung
- 31: kreisrunde Scheiben
- 32: kreisrunden Ausnehmung
- 33: Abstandshalter
- 34: exzentrische Feststellelemente
- 35: äußerer Kreisbogen
- 36: u-förmige Abstandsbleche
- 37: Schenkel der u-förmigen Abstandsbleche 36
- 39: Falz im Abstandshalter 33

## Patentansprüche

1. Vorrichtung zur Lagerung eines Leitungsrohrs in einer teilweise hohl ausgebildeten Rotorwelle einer Windenergieanlage, wobei das Leitungsrohr (11) dazu ausgebildet ist, Leitungen für unterschiedliche Medien aus einem feststehenden Maschinenhaus der Windenergieanlage in Richtung einer mit der Rotorwelle (1) verbundenen Rotornabe (14) zu führen,**dadurch gekennzeichnet, dass** die Vorrichtung (3) mehrere exzentrische Feststellelemente (34) besitzt, wobei durch ein Verdrehen der exzentrischen Feststellelemente (34) das Leitungsrohr (11) konzentrisch ausgerichtet wird.

2. Vorrichtung nach Anspruch 1 **dadurch gekennzeichnet, dass** zwei kreisrunde Scheiben (31) über mindestens drei drehbare Abstandshalter (33) miteinander verbunden sind, welche ihrerseits mit mindestens einem exzentrischen Feststellelement (34) fest verbunden sind.

3. Vorrichtung nach einem der Ansprüche 1 oder 2 **dadurch gekennzeichnet, dass** vorzugsweise sechs exzentrische Feststellelemente (34) angeordnet sind.

4. Vorrichtung nach Anspruch 1, 2 oder 3 **dadurch gekennzeichnet, dass** die exzentrischen Feststellelemente (34) in Form eines Kreissegments mit einem äußeren Kreisbogen (35) ausgeführt sind, wobei der äußere Kreisbogen (35) einen konstanten Außenradius hat.

5. Vorrichtung nach Anspruch 4 **dadurch gekennzeichnet, dass** der Mittelpunkt des äußeren Kreisbogens (35) jedes exzentrischen Feststellelements (34) außerhalb der Rotationsachse der drehbaren Abstandshalter (33) liegt.

6. Vorrichtung nach Anspruch 2 **dadurch gekennzeichnet, dass** die kreisrunden Scheiben (31) mit jeweils einer mittig angeordneten kreisrunden Ausnehmung (32) versehen sind.

7. Vorrichtung nach Anspruch 2 oder 6 **dadurch gekennzeichnet, dass** zwischen den beiden Scheiben (31) ein Lager (16) zur Lagerung des Leitungsrohrs (11) fest mit einer der Scheiben (31) verbunden ist.

8. Vorrichtung nach Anspruch 2 **dadurch gekennzeichnet, dass** jeweils zwischen zwei drehbaren Abstandshaltern (33) ein u-förmiges Abstandsblech (36) angeordnet und fest mit den beiden Scheiben (31) verbunden ist.

9. Vorrichtung nach einem der Ansprüche 2 oder 6 bis 8 **dadurch gekennzeichnet, dass**
die Scheiben (31) an ihrem äußeren Rand über ihren gesamten Umfang mit einer Dichtung (38) versehen sind.

10. Windenergieanlage mit einer Rotorwelle (1), in der eine Vorrichtung zur Lagerung eines Leitungsrohrs gemäß einem der vorhergehenden Ansprüche 1 bis 9 angeordnet ist.

## Claims

1. Device for mounting a line pipe in a rotor shaft, designed to be partially hollow, of a wind turbine, wherein the line pipe (11) is designed to route lines for different media from a fixed machine house of the wind turbine in the direction of a rotor hub (14) connected to the rotor shaft (1), **characterized in that** the device (3) has a plurality of eccentric fixing elements (34), wherein the line pipe (11) is oriented concentrically by rotating the eccentric fixing elements (34) .

2. Device according to Claim 1, **characterized in that** two circular discs (31) are connected to one another via at least three rotatable spacers (33) which in turn are fixedly connected to at least one eccentric fixing element (34).

3. Device according to either of Claims 1 and 2, **characterized in that** six eccentric fixing elements (34) are preferably arranged.

4. Device according to Claim 1, 2 or 3, **characterized in that** the eccentric fixing elements (34) are embodied in the form of a circle segment with an outer circular arc (35), wherein the outer circular arc (35) has a constant outer radius.

5. Device according to Claim 4, **characterized in that** the centre point of the outer circular arc (35) of each eccentric fixing element (34) is situated outside the axis of rotation of the rotatable spacers (33).

6. Device according to Claim 2, **characterized in that** the circular discs (31) are provided with in each case a centrally arranged circular cutout (32).

7. Device according to Claim 2 or 6, **characterized in that**, between the two discs (31), a bearing (16) for mounting the line pipe (11) is fixedly connected to one of the discs (31) .

8. Device according to Claim 2, **characterized in that** a u-shaped spacer plate (36) is arranged in each case between two rotatable spacers (33) and fixedly connected to the two discs (31).

9. Device according to one of Claims 2 or 6 to 8, **characterized in that** the discs (31) are provided with a seal (38) at their outer edge over their entire circumference.

10. Wind turbine having a rotor shaft (1) in which a device for mounting a line pipe according to one of the preceding Claims 1 to 9 is arranged.

## Revendications

1. Dispositif pour supporter une conduite dans un arbre de rotor partiellement creux d'une éolienne, dans lequel la conduite (11) est configurée pour guider des canalisations pour différents fluides hors d'une nacelle fixe de l'éolienne en direction d'un moyeu de rotor (14) assemblé à l'arbre de rotor (1), **caractérisé en ce que** le dispositif (3) comporte plusieurs éléments de fixation excentriques (34), dans lequel la conduite (11) est orientée de façon concentrique par une rotation des éléments de fixation excentriques (34).

2. Dispositif selon la revendication 1, **caractérisé en ce que** deux disques ronds (31) sont reliés l'un à l'autre par au moins trois éléments d'écartement rotatifs (33), qui sont à leur tour reliés fixement à au moins un élément de fixation excentrique (34).

3. Dispositif selon une des revendications 1 ou 2, **caractérisé en ce que** de préférence six éléments de fixation excentriques (34) sont agencés.

4. Dispositif selon la revendication 1, 2 ou 3, **caractérisé en ce que** les éléments de fixation excentriques (34) sont réalisés sous la forme d'un segment de cercle avec un arc de cercle extérieur (35), dans lequel l'arc de cercle extérieur (35) présente un rayon extérieur constant.

5. Dispositif selon la revendication 4, **caractérisé en ce que** le centre de l'arc de cercle extérieur (35) de chaque élément de fixation excentrique (34) est situé à l'extérieur de l'axe de rotation des éléments d'écartement rotatifs (33).

6. Dispositif selon la revendication 2, **caractérisé en ce que** les disques ronds (31) sont respectivement dotés d'un évidement circulaire (32) disposé au milieu.

7. Dispositif selon la revendication 2 ou 6, **caractérisé en ce qu'**un palier (16) pour supporter la conduite (11) est assemblé de façon fixe à un des disques (31) entre les deux disques (31).

8. Dispositif selon la revendication 2, **caractérisé en ce qu'**une tôle d'écartement en forme de U (36) est disposée entre deux éléments d'écartement rotatifs (33) et est attachée de façon fixe aux deux disques (31).

9. Dispositif selon l'une des revendications 2 ou 6 à 8, **caractérisé en ce que** les disques (31) sont munis à leur bord extérieur d'un joint d'étanchéité (38) sur tout leur pourtour.

10. Eolienne avec un arbre de rotor (1), dans lequel est disposé un dispositif pour supporter une conduite selon l'une quelconque des revendications 1 à 9.
